# EUROPEAN PATENT SPECIFICATION

(11) **EP 2 274 533 B1**
(45) Date of publication and mention of the grant of the patent: **08.08.2012**
(21) Application number: 08724168.3
(22) Date of filing: 08.04.2008
(51) Int. Cl.: F16D 65/12

(54) **A BRAKE FOR A WORK MACHINE, A WHEEL HUB UNIT AND A WORK MACHINE**
BREMSE FÜR EINE ARBEITSMASCHINE, RADNABENEINHEIT UND ARBEITSMASCHINE
FREIN POUR MACHINE DE CHANTIER, UNITÉ DE MOYEU DE ROUE ET MACHINE DE CHANTIER

(43) Date of publication of application: 19.01.2011
(73) Proprietor: Volvo Construction Equipment AB, 631 85 Eskilstuna (SE)
(72) Inventor: STRANDBERG, Jonny, S-635 09 Eskilstuna (SE); DAHLEN, Tord, S-632 39 Eskilstuna (SE)
(74) Representative: Fröhling, Werner Otto
(86) International application number: PCT/SE2008/000253
(87) International publication number: WO 2009/126067

(56) References cited:
- EP-A1- 1 691 101
- WO-A1-00/15975
- WO-A1-99/15805
- GB-A- 2 116 651
- JP-A- 11 101 266
- JP-A- 58 072 735
- US-A- 2 163 884
- US-A- 3 231 058
- US-A- 4 072 219
- US-A- 4 529 079
- US-A- 4 585 096
- US-A- 4 585 096
- US-A- 5 035 305

## Description

### FIELD OF THE INVENTION AND PRIOR ART

The present invention relates to a brake for a work machine, wherein the brake comprises a brake rotor, a hydraulically operated device for actuating the brake by clamping the brake rotor, and means for damping jerks resulting from a sudden brake actuation. The invention further relates to a wheel hub unit comprising the brake and a work machine comprising the wheel hub unit.

The invention can be applied in vehicles or work machines which are intended to be driven on a relatively flat surface, such as a road, and/or on uneven ground off road. The invention is especially applicable for a relatively slow moving work machine, such as a wheel loader. By the term "relatively slow moving" is meant a vehicle/work machine with a maximum speed of about 50 km/h.

A wheel loader must be equipped with brakes that are suited for the varying characteristics of the machine. In one extreme case, a fully loaded machine must be powerfully retarded and in another extreme case the same machine without any load must be gently braked. In order to enable the driver of the machine to handle the machine, the retardation must feel controllable and manageable under all conditions.

According to a known solution, wet brakes are arranged at each wheel. More specifically, a reduction gear in the form of a planetary gear is operatively connected between an end of a drive shaft extending from a central gear (differential gear) in an axle and a wheel hub. The planetary gear is adapted for a downshift of rotational speed from the drive shaft to the wheel hub. The wet brake is arranged for braking the drive shaft. Especially, a brake rotor is rotationally rigidly connected to the drive shaft. A moveable piston is operatively connected to brake pads for clamping a brake rotor between the brake pads for brake actuation. The piston is moved under the pressure of a hydraulic oil.

When the brake is actuated (initiated via depression of a brake pedal) it takes a certain time to move the brake piston from an initial position to the position when the brake pads are in contact with the brake rotor. Once the brake piston has reached the latter position, the pressurization of the hydraulic oil against the brake piston commences, which leads to a powerful excess pressure surge in the form of a pressure pulse in the hydraulic oil. This excess pressure surge gives rise to a brake shock (a powerful retardation of the machine), which the driver experiences as a jerk. Such a jerk results in that the driver is exposed to vibrations. The excess pressure surge also results in that the components of the brake being exposed to heavy stresses, which among other things generates noise. The noise is experienced by the driver and persons near the machine as an irritation.

US-A-5 035 305 discloses a brake having cushioning means to dampen reaction forces between the brake assembly components.

According to a known solution to said problem of jerks in the actuation phase of the brake, the hydraulic circuit is provided with damping means in the form of an accumulator for accumulating the excess energy in the hydraulic oil.

### SUMMARY OF THE INVENTION

One object of the invention is to provide a hydraulically operated wet brake which is adapted to at least reduce the jerks resulting from brake actuation and which creates conditions for a more cost-efficient brake system. Further, the brake should provide good controllability.

This object is achieved by means of the brake according to claim 1. Thus, the object is achieved in that the brake rotor comprises a pair of brake force transmitting discs and that the damping means is formed by a damping layer positioned between the brake force transmitting discs and secured to each of the discs.

The brake rotor design reduces the sensitivity of the brake at the initiation in that the damping layer is adapted to absorb energy. In other words, the damping layer functions as a cushioning means.

A secondary effect is that the noise from the actuation of the brake is eliminated.

The brake force transmitting discs are configured for a rotationally rigid connection with a drive member (preferably a drive shaft). Due to the fact that the damping layer is interposed between the discs, the brake function is preserved even if the damping layer and/or the attachment of the damping layer to the metallic discs is damaged.

Accordingly, the inventive design of the brake creates conditions for eliminating the accumulator in the hydraulic system according to prior art.

According to a preferred embodiment of the invention, the damping layer comprises cork material.

Further preferred embodiments and advantages of these emerge from the description below and from the claims.

### BRIEF DESCRIPTION OF THE FIGURES

The invention will be described in greater detail below with reference to the embodiments shown in the accompanying drawings, in which
- FIG. 1: shows side view of a wheel loader,
- FIG. 2: shows a diagrammatic, partly cut side view of a wheel hub unit of the wheel loader according to a first embodiment,
- FIG. 3: shows a cross sectional view of a brake rotor in a brake provided in the wheel hub unit in figure 2, and
- FIG. 4: is a side view of the brake rotor in figure 3.

### DETAILED DESCRIPTION OF PREFERRED EMBODIMENTS

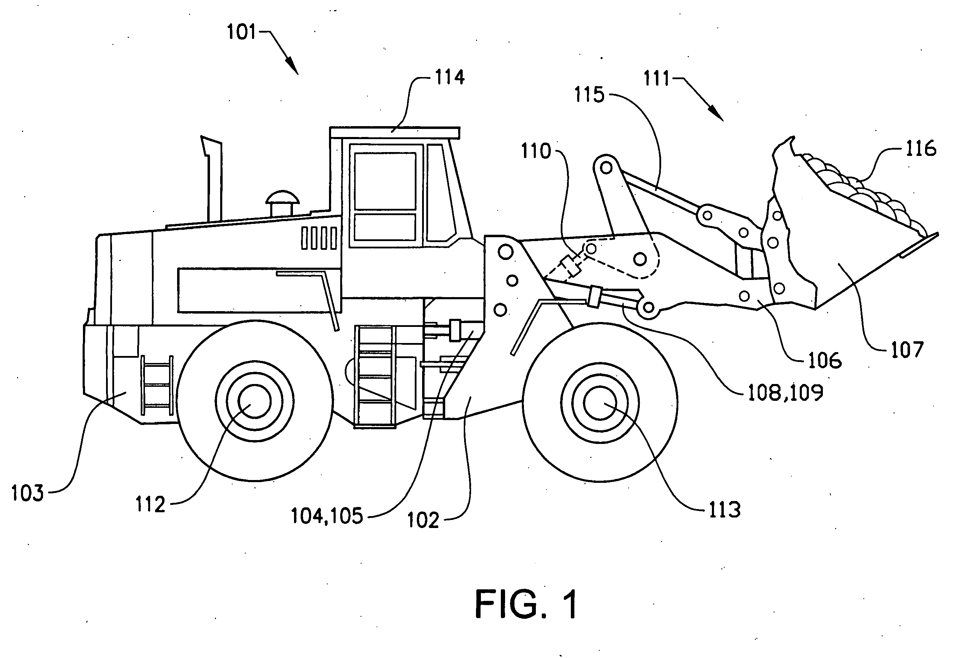

Figure 1 shows a frame-steered work machine constituting a wheel loader 101. The body of the wheel loader 101 comprises a front body section 102 and a rear body section 103, which sections each has an axle 112,113 for driving a pair of wheels. The rear body section 103 comprises a cab 114. The body sections 102, 103 are connected to each other in such a way that they can pivot in relation to each other around a vertical axis by means of two first actuators in the form of hydraulic cylinders 104, 105 arranged between the two sections. The hydraulic cylinders 104,105 are thus arranged one on each side of a horizontal centerline of the vehicle in a vehicle traveling direction in order to turn the wheel loader 101.

The wheel loader 101 comprises an equipment 111 for handling an external load, such as objects or material. The equipment 111 comprises a load-arm unit 106 and an implement 107 in the form of a bucket fitted on the load-arm unit. A first end of the load-arm unit 106 is pivotally connected to the front vehicle section 102. The bucket 107 is pivotally connected to a second end of the load-arm unit 106.

The load-arm unit 106 can be raised and lowered relative to the front section 102 of the vehicle by means of two second actuators in the form of two hydraulic cylinders 108, 109, each of which is connected at one end to the front vehicle section 102 and at the other end to the load-arm unit 106. The bucket 107 can be tilted relative to the load-arm unit 106 by means of a third actuator in the form of a hydraulic cylinder 110, which is connected at one end to the front vehicle section 102 and at the other end to the bucket 107 via a link-arm system 115.

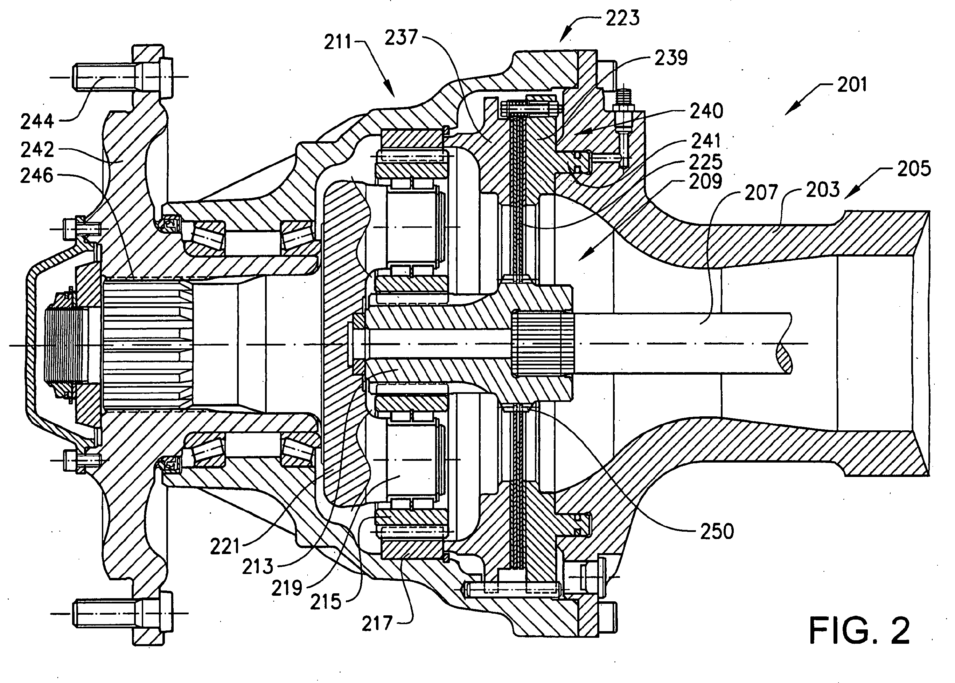

Figure 2 shows a first embodiment of a wheel hub unit 201 in a diagrammatic, partly cut side view. The wheel hub unit 201 is arranged at one end of an axle case 203 of a wheel axle 205. A drive shaft 207 extends inside the axle case 203 in a transverse direction of the work machine. The drive shaft 207 is, at one 209 of its ends, provided with a hub reduction gear 211 in the form of a planetary gear transmission. At its other end, the drive shaft 207 is operationally connected to a central gear (not shown) which in turn is driven by the power unit of the vehicle via a gearbox and a drive shaft extending in a longitudinal direction of the work machine.

The planetary gear transmission 211 comprises a sun gear 213, which is rotationally rigidly connected to the drive shaft 207. Thus, the sun gear 213 forms an input to the reduction gear. The planetary gear transmission 211 further comprises a number of circumferentially spaced planet gears 215 in driving interconnection with the sun gear and with a ring gear 217 via teeth. The planetary gear transmission 211 is of a type with a stationary ring gear.

A planet carrier 221, also known as a planet gear holder, is adapted so as to hold the planet gears 215. To be precise, each of the planet gears 215 is journalled on an axially extending shaft pivot 219. The number of planet gears 215 can be one, two, three, four or more. The planet carrier 221 forms an output from the reduction gear.

A brake 223 consisting of a wet brake is adapted to brake the drive shaft 207. Thus, the brake 223 is arranged between the reduction gear 211 and the central gear (not shown) in the axle. The brake comprises a single brake rotor 225. The sun gear 213 has guide surfaces, in the form of a number of parallel ridges, or teeth, for engagement with and guidance in the axial direction of the brake rotor 225 when the brake 223 is activated. The connection consists of a spline joint 250. Thus, the brake rotor 225 is connected to the sun gear 213 and therefore to the drive shaft 207 in a rotationally fixed manner and is displaceable in the axial direction on said spline joint 250.

The single brake rotor 225 is arranged between a pair of brake pads 237,239. The brake further comprises a hydraulically operated device 240 for actuating the brake by clamping the brake rotor 225. The brake device 240 comprises a brake piston 241 for applying the brake by pressing the brake rotor between the brake pads 237,239 and thus increasing the friction force between them. Thus, one of the brake pads 239 is moveable by means of the brake piston 241 and the other brake pad 237 on an opposite side of the brake rotor relative to the brake piston forms a pressure surface, or stay, against which the brake rotor is brought when the brake is applied.

By means of this type of brake, the drive shaft 207 is braked directly. The drive shaft 207 usually has a speed which is approximately six times higher than that of the wheel.

A wheel hub 242 is connected firmly to the planet carrier 221. More specifically, the wheel hub 242 is rotationally rigidly connected to the planet carrier 221 via a splined connection 246. The wheel is fastened by a conventional fastening device on the hub, usually a bolt joint 244.

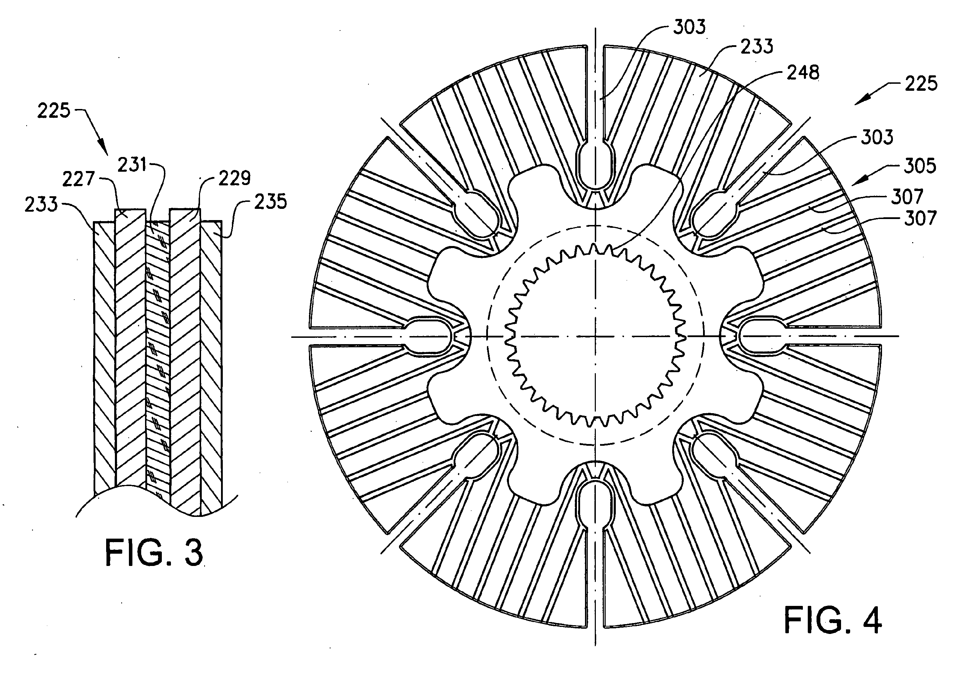

The brake rotor 225 is shown in more detail in figures 3-4. The brake rotor 225 comprises a pair of brake force transmitting discs 227,229 and a damping layer 231 positioned between the discs 227,229 and secured to each of the discs. The brake force transmitting discs 227,229 are preferably of metallic material. The damping layer is configured for absorbing energy in order to provide the brake with a soft actuation. Preferably, the damping layer comprises a cork material. However, according to an alternative, complement, the damping layer may comprise other materials, such as organic material and/or polymeric material. Each of the brake force transmitting discs 227,229 is configured for a rotationally rigid connection to a the drive shaft 207. More specifically, each of the brake force transmitting discs 227,229 comprises a central hole 248 with a cross sectional pattern complimentary to the outer pattern of the sun gear 213 for engagement therewith. The brake force transmitting discs 227,229 are connected to the drive shaft 207 via the splined connection 250, see figure 2.

Further, the brake rotor 225 comprises a layer 233,235 of friction material on an outer side of each of the brake force transmitting discs 227,229. Thus, the brake pads 237,239 are disposed adjacent each friction layer 233,235 such that a smooth surface of the pads is forced against the friction surfaces of the brake rotor.

Turning now to figure 4, the brake rotor 225 comprises a plurality of circumferentially spaced elongated openings 303 extending in a radial direction of the brake rotor. The opening configuration is configured for providing the brake rotor with a pumping effect for transporting a coolant during rotation in order to cool the brake rotor. The elongated openings 303 extend through the brake rotor in an axial direction and are open radially outwards. The friction layer 233 is provided with a groove pattern 305 adapted to transport coolant during operation. More specifically, the pattern 305 comprises a channel configuration comprises a plurality of straight channels 307 extending over the friction layer. The straight channels have a substantially radial direction. More specifically, the straight channels 307 are arranged in parallel with each other in each sector of the brake rotor 225 between two adjacent openings 303. The channel configuration contributes to said pumping effect.

The invention is not to be regarded as being limited to the illustrative embodiments described above, but a number of further variants and modifications are conceivable within the scope of the patent claims which follow. For example, the application may differ, or the power unit of the vehicle may be arranged so as to drive the drive shaft 207 directly, that is to say without an intermediate drive shaft and central gear.

Further, the invention is not limited to a brake with a single brake rotor. Thus, the brake may be provided with a plurality of brake rotors of the design described above.

## Claims

1. A wet brake (223) for a work machine (101), wherein the brake (223) comprises a brake rotor (225), a hydraulically operated device (240) for actuating the brake by clamping the brake rotor (225), and means for damping jerks resulting from a sudden brake actuation, **characterized in that** the brake rotor (225) comprises a pair of brake force transmitting discs (227,229) and that the damping means is formed by a damping layer (231) positioned between the discs and secured to each of the discs.

2. A wet brake according to claim 1, **characterized in that** the damping layer (231) is configured for absorbing energy.

3. A wet brake according to claim 1 or 2, **characterized in that** the damping layer (231) comprises cork material.

4. A wet brake according to any preceding claim, **characterized in that** each of the brake force transmitting discs (227,229) is configured for a rotationally rigid connection to a drive member (207).

5. A wet brake according to any preceding claim, **characterized in that** the brake rotor (225) comprises a layer (233,235) of friction material on an outer side of each of the brake force transmitting discs (227,229).

6. A wet brake according to any preceding claim, **characterized in that** the brake comprises a single brake rotor (225) arranged between a pair of brake pads (237,239).

7. A wet brake according to claim 6, **characterized in that** the brake actuation device (240) comprises a moveable piston (241) operatively connected to the brake pads (237,239) for clamping the brake rotor between the brake pads for brake actuation.

8. A wheel hub unit (201) for a work machine comprising a drive shaft adapted to transmit power to a wheel hub **characterized in that** the wheel hub unit (201) comprises the wet brake (223) according to any preceding claim, and that the brake rotor (225) is rotationally rigidly connected to the drive shaft.

9. A wheel hub unit according to claim 8 **characterized in that** the wheel hub unit comprises a reduction gear (211) operatively connected to an end of the drive shaft (207) and to the wheel hub and that the reduction gear is adapted for a downshift of rotational speed from the drive shaft to the wheel hub.

10. A wheel hub unit according to claim 9 **characterized in that** the reduction gear (211) comprises a planetary gear.

11. A work machine **characterized in that** it comprises a wheel hub unit according to any one of claims 8-10.

## Patentansprüche

1. Nassbremse (223) für eine Arbeitsmaschine (101), wobei die Bremse (223) einen Bremsrotor (225), eine hydraulisch betriebene Vorrichtung (240) zur Betätigung der Bremse durch Festklemmen des Bremsrotors (225) und eine Einrichtung zur Dämpfung von Erschütterungen umfasst, die aus einer plötzlichen Bremsbetätigung resultieren, **dadurch gekennzeichnet, dass** der Bremsrotor (225) ein Paar von Bremskraftübertragungsscheiben (227, 229) umfasst und dass die Dämpfungseinrichtung durch eine Dämpfungsschicht (231) gebildet ist, die zwischen den Scheiben positioniert und an jeder der Scheiben befestigt ist.

2. Nassbremse nach Anspruch 1, **dadurch gekennzeichnet, dass** die Dämpfungsschicht (231) so ausgestaltet ist, dass sie Energie absorbiert.

3. Nassbremse nach Anspruch 1 oder 2, **dadurch gekennzeichnet, dass** die Dämpfungsschicht (231) Korkmaterial umfasst.

4. Nassbremse nach irgendeinem vorhergehenden Anspruch, **dadurch gekennzeichnet, dass** jede der Bremskraftübertragungsscheiben (227, 228) für eine drehfeste Verbindung mit einem Antriebselement (207) ausgestaltet ist.

5. Nassbremse nach irgendeinem vorhergehenden Anspruch, **dadurch gekennzeichnet, dass** der Bremsrotor (225) eine Schicht (233, 235) aus Reibungsmaterial auf einer Außenseite von jeder der Bremskraftübertragungsscheiben (227, 229) umfasst.

6. Nassbremse nach irgendeinem vorhergehenden Anspruch, **dadurch gekennzeichnet, dass** die Bremse einen einzelnen Bremsrotor (225) umfasst, der zwischen einem Paar von Bremsbelägen (237, 239) angeordnet ist.

7. Nassbremse nach Anspruch 6, **dadurch gekennzeichnet, dass** die Bremsbetätigungsvorrichtung (240) einen beweglichen Kolben (241) umfasst, der mit den Bremsbelägen (237, 239) funktionell verbunden ist, um für eine Bremsbetätigung den Bremsrotor zwischen den Bremsbelägen festzuklemmen.

8. Radnabeneinheit (201) für eine Arbeitsmaschine mit einer Antriebswelle, die für die Leistungsübertragung auf eine Radnabe angepasst ist, **dadurch gekennzeichnet, dass** die Radnabeneinheit (201) die Nassbremse (223) nach irgendeinem vorhergehenden Anspruch umfasst und dass der Bremsrotor (225) drehfest mit der Antriebswelle verbunden ist.

9. Radnabeneinheit nach Anspruch 8, **dadurch gekennzeichnet, dass** die Radnabeneinheit ein Untersetzungsgetriebe (211) umfasst, das mit einem Ende der Antriebswelle (207) und mit der Radnabe funktionell verbunden ist, und dass das Untersetzungsgetriebe für ein Herunterschalten der Drehzahl von der Antriebswelle zu der Radnabe angepasst ist.

10. Radnabeneinheit nach Anspruch 9, **dadurch gekennzeichnet, dass** das Untersetzungsgetriebe (211) ein Planetenradgetriebe umfasst.

11. Arbeitsmaschine, **dadurch gekennzeichnet, dass** sie eine Radnabeneinheit nach einem der Ansprüche 8-10 umfasst.

## Revendications

1. Frein humide (223) pour engin de chantier (101), dans lequel le frein (223) comprend un rotor de frein (225), un dispositif actionné hydrauliquement (240) pour actionner le frein en serrant le rotor de frein (225), et des moyens pour amortir des secousses résultant d'un actionnement de frein soudain, **caractérisé en ce que** le rotor de frein (225) comprend une paire de disques de transmission de force de freinage (227, 229) et **en ce que** les moyens d'amortissement sont formés par une couche d'amortissement (231) positionnée entre les disques et fixée sur chacun des disques.

2. Frein humide selon la revendication 1, **caractérisé en ce que** la couche d'amortissement (231) est configurée pour absorber de l'énergie.

3. Frein humide selon les revendications 1 ou 2, **caractérisé en ce que** la couche d'amortissement (231) est constituée d'un matériau de liège.

4. Frein humide selon l'une quelconque des revendications précédentes, **caractérisé en ce que** chacun des disques de transmission de force de freinage (227, 229) est configuré pour une liaison rigide en rotation avec un élément d'entraînement (207).

5. Frein humide selon l'une quelconque des revendications précédentes, **caractérisé en ce que** le rotor de frein (225) comprend une couche (233, 235) de matériau de friction sur un côté extérieur de chacun des disques de transmission de force de freinage (227, 229).

6. Frein humide selon l'une quelconque des revendications précédentes, **caractérisé en ce que** le frein comprend un unique rotor de frein (225) disposé entre une paire de patins de frein (237, 239).

7. Frein humide selon la revendication 6, **caractérisé en ce que** le dispositif d'actionnement de frein (240) comprend un piston mobile (241) relié de manière opérationnelle au patin de frein (237, 239) pour serrer le rotor de frein entre les patins de frein pour un actionnement de freinage.

8. Unité de moyeu de roue (201) pour engin de chantier comprenant un arbre d'entraînement adapté pour transmettre une puissance à un moyeu de roue, **caractérisé en ce que** l'unité de moyeu de roue (201) comprend le frein humide (223) selon l'une quelconque des revendications précédentes, et **en ce que** le rotor de frein (225) est relié de manière rigide en rotation à l'arbre d'entraînement.

9. Unité de moyeu de roue selon la revendication 8, **caractérisée en ce que** l'unité de moyeu de roue comprend un engrenage de réduction (211) relié de manière opérationnelle à une extrémité de l'arbre d'entraînement (207) et au moyeu de roue et **en ce que** l'engrenage de réduction est adapté pour une descente de vitesse de la vitesse de rotation depuis l'arbre d'entraînement vers le moyeu de roue.

10. Unité de moyeu de roue selon la revendication 9, **caractérisée en ce que** l'engrenage de réduction (211) est constitué d'un engrenage planétaire.

11. Engin de chantier **caractérisé en ce qu'**il comporte une unité de moyeu de roue selon l'une quelconque des revendications 8 à 10.
